(19)

Europäisches
Patentamt
European
Patent Office
Office européen
des brevets

(11)   **EP 3 355 580 A1**

(12)   # EUROPEAN PATENT APPLICATION
published in accordance with Art. 153(4) EPC

(43) Date of publication:
   **01.08.2018   Bulletin 2018/31**

(51) Int Cl.:
   *H04N 19/132* [(2014.01)]   *H04N 19/134* [(2014.01)]
   *H04N 19/105* [(2014.01)]   *H04N 19/11* [(2014.01)]
   *H04N 19/119* [(2014.01)]   *H04N 19/124* [(2014.01)]
   *H04N 19/91* [(2014.01)]   *H04N 19/13* [(2014.01)]

(21) Application number: **16848900.3**

(22) Date of filing: **21.09.2016**

(86) International application number:
   **PCT/KR2016/010504**

(87) International publication number:
   **WO 2017/052174 (30.03.2017 Gazette 2017/13)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD**

(30) Priority:  **21.09.2015   US 201562221578 P**

(71) Applicant: **LG Electronics Inc.**
   **Yeongdeungpo-gu**
   **Seoul 07336 (KR)**

(72) Inventors:
   • **LI, Bohan**
     **San Jose, California 95131 (US)**
   • **EHMANN, Jana**
     **San Jose, California 95131 (US)**
   • **GULERYUZ, Onur G.**
     **San Jose, California 95131 (US)**

(74) Representative: **Katérle, Axel**
   **Wuesthoff & Wuesthoff**
   **Patentanwälte PartG mbB**
   **Schweigerstraße 2**
   **81541 München (DE)**

(54)   **METHOD AND APPARATUS FOR PROCESSING VIDEO SIGNALS USING COEFFICIENT DERIVATION PREDICTION**

(57)   The present invention provides a method for performing enhanced prediction on video signals, comprising the steps of: performing entropy decoding and dequantization on a neighboring block of a target block; performing a scaling on a dequantized transform coefficient for the neighboring block by using a scaling matrix; acquiring a modified neighboring block by performing inverse transform on the scaled transform coefficient; and generating a prediction block for the target block on the basis of the modified neighboring block.

FIG. 5

EP 3 355 580 A1

**Description**

[Technical Field]

The present invention relates to a method and apparatus for encoding, decoding a video signal using coefficient induced prediction (CIP). Specifically, the present invention relates to a method and apparatus for filtering the dequantized transform coefficient of a neighboring block similar to the original pixel and then performing prediction using a reference pixel generated through inverse transform upon performing the prediction coding.

[Background Art]

Compression encoding means a series of signal processing techniques for transmitting digitized information through a communication line or techniques for storing the information in a form that is proper for a storage medium. The media including a picture, an image, an audio, and the like may be a target for compression encoding, and particularly, a technique for performing compression encoding targeted to a picture is referred to as video image compression.

Next-generation video content is supposed to have the characteristics of high spatial resolution, a high frame rate and high dimensionality of scene representation. In order to process such content, a drastic increase of memory storage, memory access rate and processing power will result.

Accordingly, it is necessary to design a coding tool for processing next-generation video content more efficiently. In particular, a prediction method is used to utilize a correlation between the original data and prediction data, but has a problem in that quantization noise is generated. Simple prediction methods used due to computational complexity have a problem in that the correlation is weakened.

[Disclosure]

[Technical Problem]

The present invention is to provide a method of performing better prediction.

The present invention is to provide a method of enhancing a reference pixel in a prediction process.

The present invention is to provide a method of filtering the dequantized transform coefficient of a neighboring block similar to the original pixel upon performing the prediction coding.

The present invention is to provide a method of processing a video signal using a correlation between the reference data and prediction data.

The present invention is to provide a method of reducing the influence of quantization noise in prediction.

The present invention is to provide a method of a scaling a dequantized transform coefficient.

The present invention is to provide a method of defining a scaling application flag indicating whether or not to perform a scaling on a dequantized transform coefficient.

[Technical Solution]

The present invention provides a method of performing better prediction through a transform coefficient modification.

The present invention provides a method of performing better prediction by performing scaling on the transform coefficient of a neighboring block.

The present invention provides a method of scaling a dequantized transform coefficient.

The present invention provides a method of determining a scaling matrix based on a compression parameter.

The present invention provides a method of signaling or deriving a scaling application flag indicating whether or not to perform a scaling on a dequantized transform coefficient.

The present invention provides a method of performing better prediction by performing scaling on the transform coefficient of a residual block.

The present invention provides a method of generating a reconstructed pixel using a modified residual block and using the reconstructed pixel as a reference block when predicting a next target block.

[Advantageous Effects]

The present invention can improve coding efficiency by filtering the dequantized transform coefficient of a neighboring block similar to the original pixel and then performing prediction using a reference pixel generated through inverse transform upon performing the prediction coding.

Furthermore, the present invention can perform better prediction by modifying a transform coefficient and can enhance compression efficiency by reducing energy of a prediction difference signal.

Furthermore, the present invention can improve coding efficiency by generating a reconstructed pixel using a modified residual block and using the reconstructed pixel as a reference block when predicting a next target block.

Furthermore, the present invention can improve prediction performance through a prediction filter design, can enhance quality of a reconstructed frame, and can also improve coding efficiency.

Furthermore, the present invention can reduce overhead for data processing by providing a method of signaling or deriving a flag indicating whether or not to perform coefficient induced prediction (CIP).

[Description of Drawings]

FIG. 1 shows a schematic block diagram of an encoder for encoding a video signal, in accordance with one embodiment of the present invention.

FIG. 2 shows a schematic block diagram of a decoder for decoding a video signal, in accordance with one embodiment of the present invention.

FIG. 3 is an embodiment to which the present invention is applied and shows a schematic block diagram of an encoder and a decoder using a decoded pixel as the prediction value of a next target block.

FIG. 4 is an embodiment to which the present invention is applied and shows a schematic block diagram of an encoder performing encoding using coefficient induced prediction (CIP).

FIG. 5 is an embodiment to which the present invention is applied and shows a schematic block diagram of a decoder performing decoding using coefficient induced prediction (CIP).

FIG. 6 is an embodiment to which the present invention is applied and shows a schematic block diagram of a decoder for illustrating a method of determining a scaling matrix if decoding is performed using coefficient induced prediction (CIP).

FIG. 7 is an embodiment to which the present invention is applied and shows a schematic block diagram of a decoder performing decoding using the scaling of a transform coefficient for a target block along with coefficient induced prediction (CIP).

FIG. 8 is an embodiment to which the present invention is applied and shows a schematic block diagram of a decoder performing decoding using at least one scaling application flag indicating whether or not to perform a scaling on the dequantized transform coefficients of a target block and/or a neighboring block.

FIG. 9 is an embodiment to which the present invention is applied and shows a schematic block diagram of a decoder performing coefficient induced prediction (CIP) using a reference block.

FIG. 10 is an embodiment to which the present invention is applied and shows a flowchart of performing encoding using coefficient induced prediction (CIP).

FIG. 11 is an embodiment to which the present invention is applied and shows a flowchart of performing decoding using coefficient induced prediction (CIP).

[Best Mode]

The present invention provides a method of performing enhanced prediction on a video signal, including performing entropy decoding and dequantization on a neighboring block of a target block, performing scaling on the dequantized transform coefficient of the neighboring block using a scaling matrix, performing inverse transform on the scaled transform coefficient to obtain a modified neighboring block, and generating a prediction block for the target block based on the modified neighboring block.

Furthermore, in the present invention, the scaling matrix is derived based on a coding parameter, and the coding parameter includes at least one of an intra prediction mode, a quantization parameter, or a block size.

Furthermore, in the present invention, the scaling matrix is determined based on a quantized transform coefficient vector.

Furthermore, in the present invention, the method further includes extracting a scaling application flag from the video signal. The scaling application flag indicates whether or not to perform the scaling on the dequantized transform coefficient.

Furthermore, in the present invention, the method further includes deriving a scaling application flag from the video signal. The scaling application flag is derived based on at least one of coding information of the neighboring block and the scaling application flag of the neighboring blocks.

Furthermore, the present invention provides a method of performing enhanced prediction on a video signal, including performing transform on a neighboring block of a target block, quantizing a transform coefficient of the neighboring block, dequantizing the quantized transform coefficient, performing scaling on the dequantized transform coefficient using a scaling matrix, obtaining a modified neighboring block by performing inverse transform on the scaled transform coefficient, and generating a prediction block for the target block based on the modified neighboring block.

Furthermore, in the present invention, the method further includes encoding a scaling application flag value indicating that the scaling has been performed on the dequantized transform coefficient.

Furthermore, the present invention provides an apparatus performing enhanced prediction on a video signal, including an entropy decoding unit performing entropy decoding on a neighboring block of a target block, a dequantization unit performing dequantization on the entropy-decoded neighboring block, a scaling unit performing scaling on a dequantized transform coefficient using a scaling matrix, an inverse transform unit obtaining a modified neighboring block by performing inverse transform on the scaled transform coefficient, and a prediction unit generating a prediction block for the target block based on the modified neighboring block.

Furthermore, in the present invention, the apparatus further includes a parsing unit extracting a scaling application flag from the video signal. The scaling application flag indicates whether or not to perform the scaling on the dequantized transform coefficient.

Furthermore, the present invention provides an apparatus for performing enhanced prediction on a video signal, including a transform unit performing transform on a neighboring block of a target block, a quantization unit performing quantization on a transform coefficient, an inverse transform unit performing dequantization on the quantized transform coefficient, a scaling unit performing scaling on the dequantized transform coefficient using a scaling matrix, an inverse transform unit obtaining a modified neighboring block by performing inverse transform on the scaled transform coefficient, and a prediction unit generating a prediction block for the target block based on the modified neighboring block.

[Mode for Invention]

Hereinafter, exemplary elements and operations in accordance with embodiments of the present invention are described with reference to the accompanying drawings, however, it is to be noted that the elements and operations of the present invention described with reference to the drawings are provided as only embodiments and the technical spirit and kernel configuration and operation of the present invention are not limited thereto.

Furthermore, terms used in this specification are common terms that are Furthermore, terms used in this specification are common terms that are now widely used, but in special cases, terms randomly selected by the applicant are used. In such a case, the meaning of a corresponding term is clearly described in the detailed description of a corresponding part. Accordingly, it is to be noted that the present invention should not be construed as being based on only the name of a term used in a corresponding description of this specification and that the present invention should be construed by checking even the meaning of a corresponding term.

Furthermore, terms used in this specification are common terms selected to describe the invention, but may be replaced with other terms for more appropriate analysis if such terms having similar meanings are present. For example, a signal, data, a sample, a picture, a frame, and a block may be properly replaced and interpreted in each coding process. Furthermore, partitioning, decomposition, splitting, division may also be properly replaced and interpreted in each coding process. Furthermore, filtering, a modification, a change and scaling may also be properly substituted and construed in each coding process.

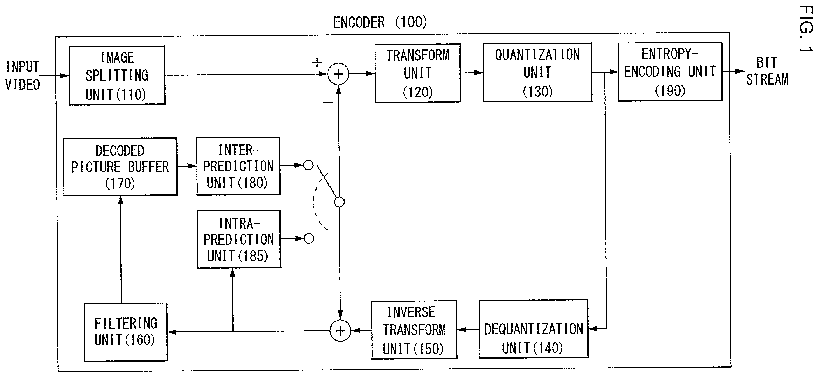

FIG. 1 shows a schematic block diagram of an encoder for encoding a video signal in accordance with one embodiment of the present invention.

Referring to FIG. 1, the encoder 100 may include an image segmentation unit 110, a transform unit 120, a quantization unit 130, a dequantization unit 140, an inverse transform unit 150, a filtering unit 160, a DPB (Decoded Picture Buffer) 170, an inter prediction unit 180, an intra prediction unit 185 and an entropy-encoding unit 190.

The image segmentation unit 110 may divide an input image (or, a picture, a frame) input to the encoder 100 into one or more process units. For example, the process unit may be a coding tree unit (CTU), a coding unit (CU), a prediction unit (PU), or a transform unit (TU).

However, the terms are used only for convenience of illustration of the present disclosure. The present invention is not limited to the definitions of the terms. In this specification, for convenience of illustration, the term "coding unit" is employed as a unit used in a process of encoding or decoding a video signal. However, the present invention is not limited thereto. Another process unit may be appropriately selected based on contents of the present disclosure.

The encoder 100 may generate a residual signal by subtracting a prediction signal output by the inter prediction unit 180 or intra prediction unit 185 from the input image signal. The generated residual signal may be transmitted to the transform unit 120.

The transform unit 120 may apply a transform technique to the residual signal to produce a transform coefficient. The transform process may be applied to a pixel block having the same size of a square, or to a block of a variable size other than a square.

The quantization unit 130 may quantize the transform coefficient and transmits the quantized coefficient to the entropy-encoding unit 190. The entropy-encoding unit 190 may entropy-code the quantized signal and then output the entropy-coded signal as a bit stream.

The quantized signal output by the quantization unit 130 may be used to generate a prediction signal. For example, the quantized signal may be subjected to an inverse quantization and an inverse transform via the dequantization unit 140 and the inverse transform unit 150 in the loop respectively to reconstruct a residual signal. The reconstructed residual signal may be added to the prediction signal output by the inter prediction unit 180 or intra prediction unit 185 to generate a reconstructed signal.

Meanwhile, in the compression process, a neighboring block may be quantized by different quantization parameters, so that deterioration of the block boundary may occur. This phenomenon is called blocking artifacts. This is one of important factors for evaluating image quality. A filtering process may be performed to reduce such deterioration. Using the filtering process, the blocking deterioration may be eliminated, and, at the same time, an error of a current picture may be reduced, thereby improving the image quality.

The filtering unit 160 may apply filtering to the reconstructed signal and then outputs the filtered reconstructed signal to a reproducing device or the decoded picture buffer 170. The filtered signal transmitted to the decoded picture buffer 170 may be used as a reference picture in the inter prediction unit 180. In this way, using the filtered picture as the reference picture in the inter-picture prediction mode, not only the picture quality but also the coding efficiency may be improved.

The decoded picture buffer 170 may store the filtered picture for use as the reference picture in the inter prediction unit 180.

The inter prediction unit 180 may perform temporal prediction and/or spatial prediction with reference to the reconstructed picture to remove temporal redundancy and/or spatial redundancy. In this case, the reference picture used for the prediction may be a transformed signal obtained via the quantization and inverse quantization on a block basis in the previous encoding/decoding. Thus, this may result in blocking artifacts or ringing artifacts.

Accordingly, in order to solve the performance degradation due to the discontinuity or quantization of the signal, the inter prediction unit 180 may interpolate signals between pixels on a subpixel basis using a low-pass filter. In this case, the subpixel may mean a virtual pixel generated by applying an interpolation filter. An integer pixel means an actual pixel existing in the reconstructed picture. The interpolation method may include linear interpolation, bi-linear interpolation and Wiener filter, etc.

The interpolation filter may be applied to the reconstructed picture to improve the accuracy of the prediction. For example, the inter prediction unit 180 may apply the interpolation filter to integer pixels to generate interpolated pixels. The inter prediction unit 180 may perform prediction using an interpolated block composed of the interpolated pixels as a prediction block.

The intra prediction unit 185 may predict a current block by referring to samples in the vicinity of a block to be encoded currently. The intra prediction unit 185 may perform a following procedure to perform intra prediction. First, the intra prediction unit 185 may prepare reference samples needed to generate a prediction signal. Then, the intra prediction unit 185 may generate the prediction signal using the prepared reference samples. Thereafter, the intra prediction unit 185 may encode a prediction mode. At this time, reference samples may be prepared through reference sample padding and/or reference sample filtering. Since the reference samples have undergone the prediction and reconstruction process, a quantization error may exist. Therefore, in order to reduce such errors, a reference sample filtering process may be performed for each prediction mode used for intra-prediction.

The prediction signal generated by the inter prediction unit 180 or the intra prediction unit 185 may be used to generate the reconstructed signal or used to generate the residual signal. In this case, the prediction signal may be applied to various embodiments described in this specification.

In one embodiment, in the present invention, scaling on may be performed on a dequantized transform coefficient for a neighboring block using a scaling matrix. A modified neighboring block may be obtained by performing inverse transform on the scaled transform coefficient and may be used as a prediction block.

In this case, the scaling matrix may be derived based on a coding parameter. The coding parameter may include at least one of an intra prediction mode, a quantization parameter and a block size.

Furthermore, the scaling matrix may be determined based on a quantized transform coefficient vector.

Furthermore, in the present invention, a scaling application flag indicating whether or not to perform a scaling on the dequantized transform coefficient may be used.

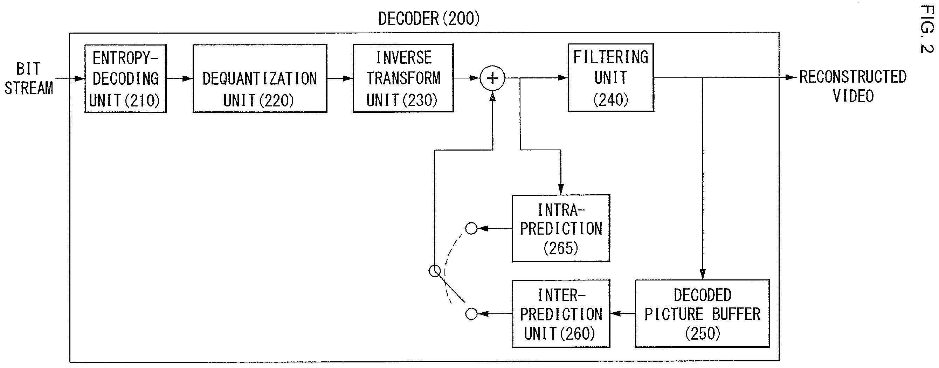

FIG. 2 shows a schematic block diagram of a decoder for decoding a video signal, in accordance with one embodiment of the present invention.

Referring to FIG. 2, the decoder 200 may include a parsing unit (not shown), an entropy decoding unit 210, a dequantization unit 220, an inverse transform unit 230, a filtering unit 240, a decoded picture buffer (DPB) 250, an inter prediction unit 260 and an intra prediction unit 265.

A reconstructed video signal output by the decoder 200 may be reproduced using a reproducing device.

The decoder 200 may receive the signal output by the encoder as shown in FIG. 1. The received signal may be entropy-decoded via the entropy decoding unit 210.

The dequantization unit 220 may obtain a transform coefficient from the entropy-decoded signal using quantization step size information.

The inverse transform unit 230 may inverse transform the transform coefficient to obtain a residual signal.

A reconstructed signal may be generated by adding the obtained residual signal to the prediction signal output by the inter prediction unit 260 or the intra prediction unit 265. In this case, various embodiments which are disclosed in description may be applied to the prediction signal.

The filtering unit 240 may apply filtering to the reconstructed signal and may output the filtered reconstructed signal to the reproducing device or the decoded picture buffer unit 250. The filtered signal transmitted to the decoded picture buffer unit 250 may be used as a reference picture in the inter prediction unit 260.

Herein, detailed descriptions for the filtering unit 160, the inter prediction unit 180 and the intra prediction unit 185 of the encoder 100 may be equally applied to the filtering unit 240, the inter prediction unit 260 and the intra prediction unit 265 of the decoder 200 respectively.

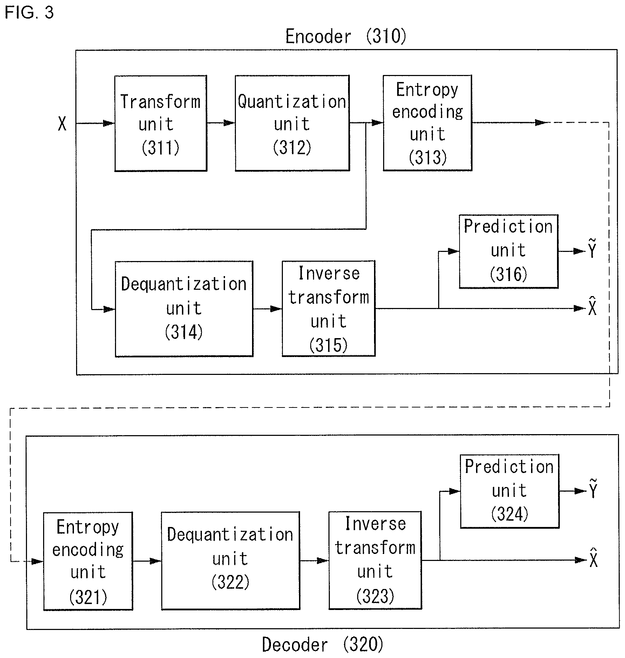

FIG. 3 is an embodiment to which the present invention is applied and shows a schematic block diagram of an encoder and a decoder using a decoded pixel as the prediction value of a next target block.

The present invention provides a technology for performing prediction using a reference pixel generated through inverse transform after filtering the dequantized transform coefficient of a neighboring block similar to the original pixel upon performing the prediction coding. In this specification, such a prediction technology is called "coefficient induced prediction (CIP)."

Furthermore, in the present invention, transform coefficients can be modified along with quantization parameters by modifying the transform coefficients quantized for prediction and reconstruction, thereby being capable of reducing the influence of quantization noise for prediction. Furthermore, a transform coefficient modification can be coupled with a simple prediction method in such a way as to minimize overall computational complexity. In this case, the transform coefficient modification is nonlinear and can provide a predictor that may not be obtained by the existing linear prediction method.

The present invention may be applied to intra prediction and/or inter prediction in a video compression process, but the present invention is not limited thereto and may be applied to various signal processing and compression applications.

Referring to FIG. 3, the encoder 310 to which the present invention is applied may include a transform unit 311, a quantization unit 312, an entropy encoding unit 313, a dequantization unit 314, an inverse transform unit 315, and a prediction unit 316. The decoder 320 may include an entropy decoding unit 321, a dequantization unit 322, an inverse transform unit 323, and a prediction unit 324.

The operations and characteristics of the aforementioned function units may be applied to the function units described in the drawings of this specification. Hereinafter, a redundant description is omitted, and only a different portion or portions necessary to supplement each embodiment are described.

First, when the original video signal X is received, the encoder 310 may perform transform through the transform unit 311 and perform quantization through the quantization unit 312. The quantized signal may be transmitted to the decoder 320 via the entropy encoding unit 313. In this case, the original video signal X may include an 8x8 block of a video frame, for example. Furthermore, the present invention is not limited thereto, and the original video signal X may correspond to a residual signal or prediction error signal obtained by subtracting a prediction signal from the original signal. In this case, other terms may be construed based on the residual signal so that the concept of the present invention can be applied to the residual signal.

Meanwhile, the quantized signal may be dequantized/inverse transformed through the dequantization unit 314 and the inverse transform unit 315. A signal decoded as described above may be expressed as $\hat{X}$. In this case, if a neighboring block within the same video frame is Y, a prediction signal $\tilde{Y}$ for the neighboring block may be generated from the decoded signal $\hat{X}$ through the prediction unit 316. This is expressed into Equations 1 to 3 in the form of an equation.

## 【Equation 1】

$$\hat{C} = dequantize(Q)$$

In this case, Q indicates the vector of quantized transform coefficients of X, and $\hat{C}$ indicates the vector of dequantized transform coefficients.

## 【Equation 2】

$$\hat{X} = T^{-1}\hat{C}$$

In this case, $\hat{X}$ is the results obtained by performing inverse transform on the vector of the dequantized transform coefficients, and indicates the decoded signal. Furthermore, $T^{-1}$ indicates an inverse transform matrix and may mean an inverse-DCT matrix, for example.

## 【Equation 3】

$$\tilde{Y} = simple\_predict(T^{-1}\hat{C})$$

In this case, $\tilde{Y}$ means the prediction signal of a neighboring block Y neighboring a target block. For example, $\tilde{Y}$ may be generated based on $\hat{X}$.

Meanwhile, the decoder 320 may receive the entropy-encoded signal, may perform entropy decoding on the entropy-encoded signal through the entropy decoding unit 321, and may perform dequantization/inverse transform the entropy-decoded signal through the dequantization unit 322/inverse transform unit 323. Furthermore, as described in the encoder 310, the decoder 320 may generate the prediction signal $\tilde{Y}$ for the neighboring block from the decoded signal $\hat{X}$ through the prediction unit 324. Hereinafter, a redundant description is omitted.

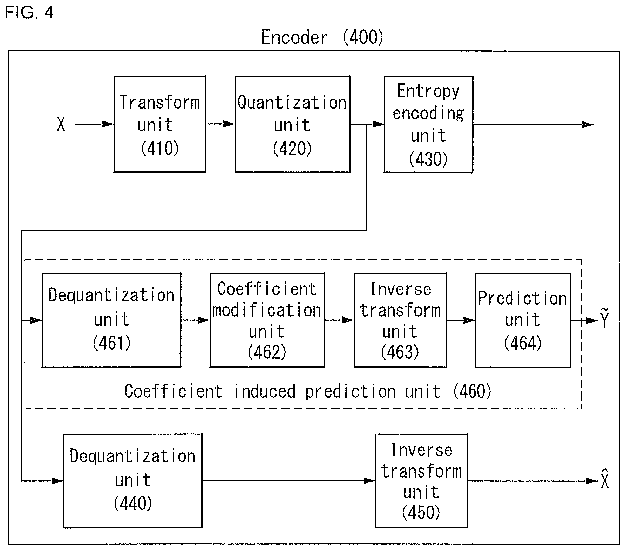

FIG. 4 is an embodiment to which the present invention is applied and shows a schematic block diagram of an encoder performing encoding using coefficient induced prediction (CIP).

Referring to FIG. 4, the encoder 400 to which the present invention is applied may include a transform unit 410, a quantization unit 420, an entropy encoding unit 430, a dequantization unit 440, an inverse transform unit 450, and a coefficient induced prediction unit 460. Furthermore, the coefficient induced prediction unit 460 may include a dequantization unit 461, a coefficient modification unit 462, an inverse transform unit 463, and a prediction unit 464.

The operations and characteristics of the aforementioned function units may be applied to the function units described in the drawings of this specification. Hereinafter, a redundant description is omitted, and only a different portion or portions necessary to supplement each embodiment are described.

First, when the original video signal X is received, the encoder 310 may perform transform through the transform unit 410 and perform quantization through the quantization unit 420. The quantized signal may be transmitted to the decoder through the entropy encoding unit 430. In this case, the original video signal X may include an 8x8 block of a video frame, for example.

The dequantization unit 440 and the inverse transform unit 450 may generate a decoded signal $\hat{X}$ by dequantizing/inverse transforming the quantized signal.

Meanwhile, the quantized signal may be transmitted to the coefficient induced prediction unit 460, and coefficient induced prediction may be performed on the quantized signal.

The coefficient induced prediction unit 460 may filter the dequantized transform coefficient of a neighboring block similar to the original pixel, and may then perform prediction using a reference pixel generated through inverse transform.

For detailed example, the dequantization unit 461 may calculate the dequantized transform coefficient by performing dequantization on the quantized signal.

Furthermore, the coefficient modification unit 462 may modify the dequantized transform coefficient by applying a scaling matrix to the dequantized transform coefficient. For example, the scaling matrix may indicate a diagonal matrix having scaling values.

In an embodiment of the present invention, the scaling matrix may be determined or derived based on a coding parameter. For example, the coding parameter may include at least one of an intra prediction mode, a quantization parameter, or a block size.

The inverse transform unit 463 may perform inverse transform on the modified transform coefficient. The prediction unit 464 may generate a prediction signal $\tilde{Y}$ based on the result value of the inverse transform. In this case, the prediction signal $\tilde{Y}$ may mean the prediction signal for a neighboring block Y. The prediction signal $\tilde{Y}$ for the neighboring block may be called a modified neighboring block.

The inverse-transformed result value may mean a modified signal having a value different from that of the decoded signal $\hat{X}$. The modified signal may be expressed as $\hat{X}'$ and may be called a changed signal or a scaled signal. In this case, the signal may be substituted with a block, frame or pixel and construed.

This is expressed into Equation 4 in the form of an equation.

【Equation 4】

$$\tilde{Y} = simple\_predict(T^{-1}S\hat{C})$$

In this case, S indicates the diagonal matrix having scaling values, and the diagonal matrix may be called a scaling matrix. $\tilde{Y}$ means the prediction signal of the neighboring block Y neighboring a target block.

The scaling matrix may be determined or derived based on a coding parameter. For example, the coding parameter may include at least one of an intra prediction mode, a quantization parameter, or a block size. Assuming that the coding parameter is obtained as a vector $\Omega$, the scaling matrix may be expressed into the function of $\Omega$, that is, S($\Omega$).

In an embodiment of the present invention, the scaling matrix S may be expressed into the function of Q as in Equation 5. The scaling matrix S(Q,$\Omega$) may be determined based on at least one of Q and $\Omega$.

【Equation 5】

$$S(Q,\Omega)_{i,j} = \begin{cases} f(i, Q_i, \Omega), & i = j \\ 0, & otherwise \end{cases}$$

In this case, f(i,Qi,$\Omega$) indicates the function of indicated parameters, and f may be called a coefficient induced prediction function (CIP function).

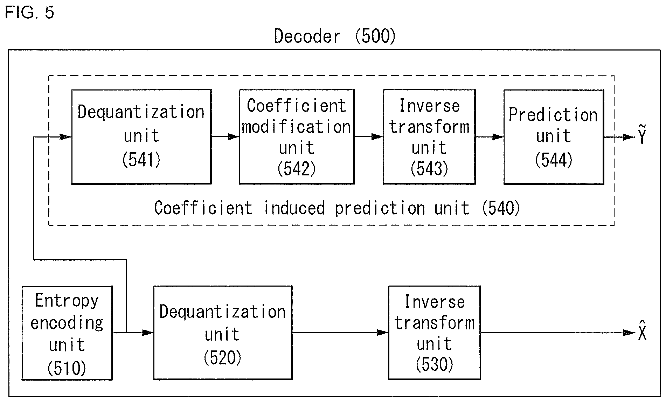

FIG. 5 is an embodiment to which the present invention is applied and shows a schematic block diagram of a decoder performing decoding using coefficient induced prediction (CIP).

Referring to FIG. 5, the decoder 500 to which the present invention is applied may include an entropy decoding unit 510, a dequantization unit 520, an inverse transform unit 530, and a coefficient induced prediction unit 540. Furthermore, the coefficient induced prediction unit 540 may include a dequantization unit 541, a coefficient modification unit 542, an inverse transform unit 543, and a prediction unit 544.

The operations and characteristics of the aforementioned function units may be applied to the function units described in the drawings of this specification. Hereinafter, a redundant description is omitted, and only a different portion or portions necessary to supplement each embodiment are described.

The decoder 500 may receive an entropy-encoded signal, may perform entropy decoding on the entropy-encoded signal through the entropy decoding unit 510, and may perform dequantization/inverse transform the entropy-decoded signal through the dequantization unit 520/inverse transform unit 530.

Meanwhile, the entropy-decoded signal may be transmitted to the coefficient induced prediction unit 540, and coefficient induced prediction may be performed on the entropy-decoded signal.

For example, the coefficient induced prediction unit 540 may generate a modified transform coefficient by scaling the dequantized transform coefficient of a neighboring block using a scaling matrix. Furthermore, the coefficient induced prediction unit 540 may perform inverse transform on the modified transform coefficient, and may perform prediction using a result value generated from the inverse-transformed coefficient as a reference pixel.

The function units of the coefficient induced prediction unit 540 may operate identically with or similar to the coefficient induced prediction unit 460 of the aforementioned encoder, and a redundant description is hereinafter omitted.

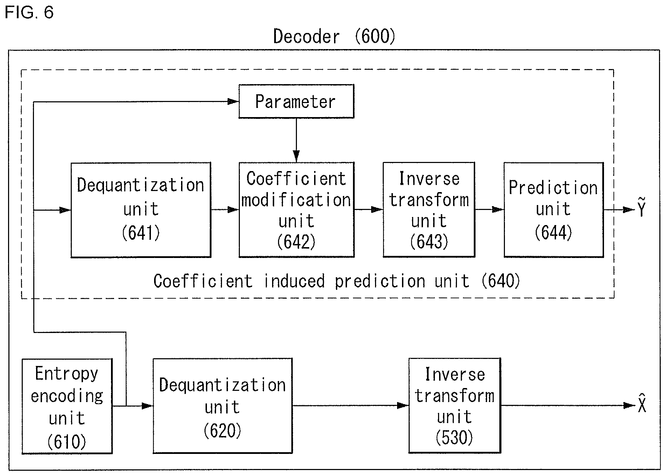

FIG. 6 is an embodiment to which the present invention is applied and shows a schematic block diagram of a decoder for illustrating a method of determining a scaling matrix if decoding is performed using coefficient induced prediction (CIP).

Referring to FIG. 6, the decoder 600 to which the present invention is applied may include an entropy decoding unit 610, a dequantization unit 620, an inverse transform unit 630, and a coefficient induced prediction unit 640. Furthermore, the coefficient induced prediction unit 640 may include a dequantization unit 641, a coefficient modification unit 642, an inverse transform unit 643, and a prediction unit 644.

The operations and characteristics of the aforementioned function units may be applied to the function units described in the drawings of this specification. Hereinafter, a redundant description is omitted, and only a different portion or portions necessary to supplement each embodiment are described.

The decoder 600 may receive an entropy-encoded signal, may perform entropy decoding on the entropy-encoded signal through the entropy decoding unit 610, and may perform dequantization/inverse transform on the entropy-decoded signal through the dequantization unit 620/inverse transform unit 630.

Furthermore, the entropy-decoded signal may be transmitted to the coefficient induced prediction unit 640, and coefficient induced prediction may be performed on the entropy-decoded signal. The coefficient induced prediction unit 640 may generate a modified transform coefficient by scaling the dequantized transform coefficient of a neighboring block using a scaling matrix. Furthermore, the coefficient induced prediction unit 640 may perform inverse transform on the modified transform coefficient, and may perform prediction using a result value generated from the inverse-transformed coefficient as a reference pixel.

This is described more specifically. The coefficient modification unit 642 of the coefficient induced prediction unit 640 may generate the modified transform coefficient by applying the scaling matrix to the dequantized transform coefficient of a neighboring block. In this case, in order to determine the scaling matrix, at least one parameter may be used. For example, the at least one parameter may include a training set of (X,Y,Ω) triplets. Alternatively, the at least one parameter may include a coding parameter. The coding parameter may include at least one of an intra prediction mode, an inter prediction mode, a quantization parameter, or a block size.

For another example, the coefficient modification unit 642 may use at least one parameter to generate the modified transform coefficient, and an example thereof has been described above.

An embodiment of the present invention proposes a method of determining the scaling matrix.

First, $\Psi$ is assumed to be a training set of (X,Y,Ω) triplets. The scaling matrix may be obtained by searching for an optimal coefficient induced prediction function (CIP function). The optimal coefficient induced prediction function may be obtained through Equation 6. For example, the optimal coefficient induced prediction function may correspond to a value that minimizes the difference between a neighboring block Y and the prediction signal $\tilde{Y}$ of the neighboring block.

【Equation 6】

$$f^* = \underset{f}{\arg\min} \sum_{(X,Y,\Omega)\in\Psi} \left\| Y - simple\_predict(T^{-1}S(Q,\Omega)\hat{C}) \right\|_2^2$$

In this case, S(Q,Ω) may be defined as the function according to Equation 5 as described above.

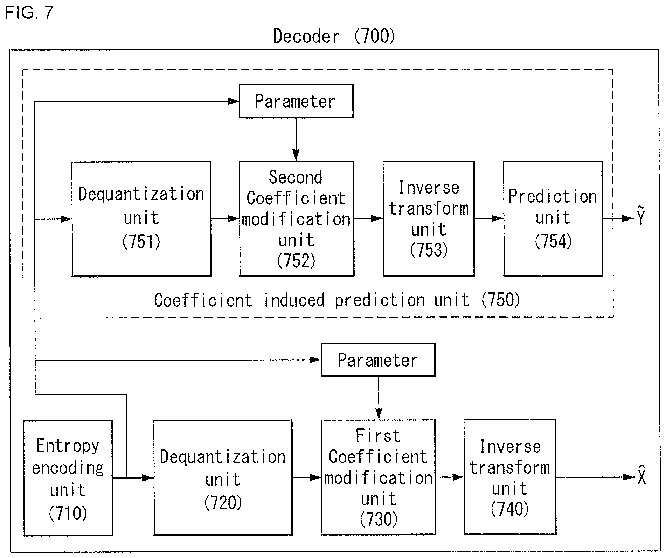

FIG. 7 is an embodiment to which the present invention is applied and shows a schematic block diagram of a decoder performing decoding using the scaling of a transform coefficient for a target block along with coefficient induced prediction (CIP).

The present invention can perform better prediction by applying a scaling matrix to the dequantized transform coefficient of a target block in addition to by performing coefficient induced prediction (CIP) on the dequantized transform coefficient of a neighboring block.

Referring to FIG. 7, the decoder 700 to which the present invention is applied may include an entropy decoding unit 710, a dequantization unit 720, a first coefficient modification unit 730, an inverse transform unit 740, and a coefficient induced prediction unit 750. Furthermore, the coefficient induced prediction unit 750 may include a dequantization unit 751, a second coefficient modification unit 752, an inverse transform unit 753, and a prediction unit 754.

The operations and characteristics of the aforementioned function units may be applied to the function units described in the drawings of this specification. Hereinafter, a redundant description is omitted, and only a different portion or portions necessary to supplement each embodiment are described.

First, the decoder 700 may receive an entropy-encoded signal, may perform entropy decoding on the entropy-encoded signal through the entropy decoding unit 710, and may generate the dequantized transform coefficient of a target block by performing dquantization on the entropy-decoded signal through the dequantization unit 720.

The first coefficient modification unit 730 may generate the modified transform coefficient of the target block by applying a first scaling matrix to the dequantized transform coefficient of the target block. In this case, in order to determine the first scaling matrix, at least one parameter may be used. For example, the at least one parameter may include a training set of (X,Y,Ω) triplets.

Such a process is expressed into Equations 7 and 8 in the form of an equation.

【Equation 7】

$$\hat{C} = dequantize(Q)$$

【Equation 8】

$$\hat{X} = T^{-1}S_1(Q,\Omega)\hat{C}$$

In this case, S1 indicates the first scaling matrix, and $\tilde{X}$ indicates a modified decoded signal.

Furthermore, the modified transform coefficient of the target block may be decoded by performing inverse transform through the inverse transform unit 740.

Meanwhile, the contents described in FIG. 6 may be applied to the dequantization unit 751, second coefficient modification unit 752, inverse transform unit 753 and prediction unit 754 of the coefficient induced prediction unit 750. The scaling matrix used in the second coefficient modification unit 752 may be called a second scaling matrix.

A process obtained through the coefficient induced prediction unit 750 may be expressed into Equation 9.

【Equation 9】

$$\tilde{Y} = simple\_predict(T^{-1}S_2(Q,\Omega)\hat{C})$$

In this case, S2 may indicate the second scaling matrix.

In an embodiment of the present invention, the first scaling matrix and the second scaling matrix may have different values. However, the present invention is not limited thereto, and the same matrix may be applied to the two scaling matrices.

The first scaling matrix S1 and the second scaling matrix S2 are expressed into Equations 10 and 11 in the form of an equation.

【Equation 10】

$$S_1(Q,\Omega)_{i,j} = \begin{cases} f_1(i, Q_i, \Omega), & i = j \\ 0, & otherwise \end{cases}$$

【Equation 11】

$$S_2(Q,\Omega)_{i,j} = \begin{cases} f_2(i, Q_i, \Omega), & i = j \\ 0, & otherwise \end{cases}$$

In this case, f(i,Qi,$\Omega$) indicates the function of indicated parameters, and f may be called a coefficient induced prediction function (CIP function).

In an embodiment of the present invention, each of the scaling matrices S1 and S2 may be obtained by searching for an optimal coefficient induced prediction function (CIP function). The optimal coefficient induced prediction functions $f_1^*$ and $f_2^*$ may be obtained through Equations 12 and 13. For example, in Equation 12, the first optimal coefficient induced prediction function $f_1^*$ may correspond to a value that minimizes the difference between the target block X and the modified decoded signal $\hat{X}$. Furthermore, in Equation 13, the second optimal coefficient induced prediction function $f_2^*$ may correspond to a value that minimizes the difference between a neighboring block Y and the prediction signal $\tilde{Y}$ of the neighboring block.

【Equation 12】

$$f_1^* = \operatorname{argmin}_{f_1} \sum_{(X,Y,\Omega)\in\Psi} \left\| X - T^{-1}S_1(Q,\Omega)\hat{C} \right\|_2^2$$

【Equation 13】

$$f_2^* = \operatorname{argmin}_{f_2} \sum_{(X,Y,\Omega)\in\Psi} \left\| Y - simple\_predict(T^{-1}S_2(Q,\Omega)\hat{C}) \right\|_2^2$$

In this case, $\Psi$ indicates a training set of (X,Y,$\Omega$) triplets.

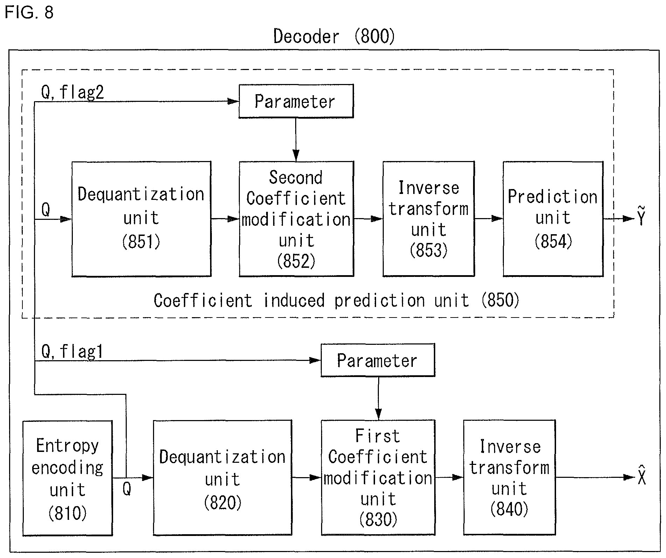

FIG. 8 is an embodiment to which the present invention is applied and shows a schematic block diagram of a decoder performing decoding using at least one scaling application flag indicating whether or not to perform a scaling on the dequantized transform coefficients of a target block and/or a neighboring block.

Referring to FIG. 8, the decoder 800 to which the present invention is applied may include an entropy decoding unit 810, a dequantization unit 820, a first coefficient modification unit 830, an inverse transform unit 840, and a coefficient induced prediction unit 850. Furthermore, the coefficient induced prediction unit 850 may include a dequantization unit 851, a second coefficient modification unit 852, an inverse transform unit 853, and a prediction unit 854. The contents of FIG. 7 may be applied to the function units of the decoder. Furthermore, the operations and characteristics of the aforementioned function units may be applied to the function units of the decoder. Hereinafter, a redundant description is omitted, and only a different portion or portions necessary to supplement each embodiment are described.

The present invention defines a scaling application flag indicating whether or not to perform a scaling on a dequantized transform coefficient. For example, a flag indicating whether or not to perform a scaling on the dequantized transform coefficient of a target block may be called a first scaling application flag or a target scaling application flag. A flag indicating whether or not to perform a scaling on the dequantized transform coefficient of a neighboring block may be called a second scaling application flag or a neighboring scaling application flag.

In this case, in using the expression "scaling application flag", scaling may be substituted with a term, such as filtering, a modification or a change, and used as described above.

The scaling application flag may be defined in various levels (e.g., a sequence, a frame, a slice, a coding unit, a prediction unit, and a transform unit), but the present invention is not limited thereto. The scaling application flag may be used in at least one level.

Furthermore, the scaling application flag may be signaled and transmitted to the decoder, but the present invention is not limited thereto. The scaling application flag may be derived based on coding information. For example, the coding information may include at least one of the coding parameter of a current block or neighboring block, information common to the encoder/decoder, and information corresponding to $\Omega/Q$.

In the present invention, the aforementioned embodiments of FIGS. 3 to 7 may be performed based on the scaling application flag.

For example, the present invention may perform coefficient induced prediction (CIP) on the dequantized transform coefficient of a neighboring block based on the scaling application flag. Furthermore, the present invention may apply a scaling matrix to the dequantized transform coefficient of a target block based on the scaling application flag.

In this case, the scaling matrix may be defined as in Equations 14 and 15.

【Equation 14】

$$S_1(Q, \Omega, flag1)_{i,j} = \begin{cases} f_1(i, Q_i, \Omega), & i = j, flag1 = 1 \\ 1, & i = j, flag1 = 0 \\ 0, & otherwise, \end{cases}$$

【Equation 15】

$$S_2(Q, \Omega, flag2)_{i,j} = \begin{cases} f_2(i, Q_i, \Omega), & i = j, flag2 = 1 \\ 1, & i = j, flag2 = 0 \\ 0, & otherwise. \end{cases}$$

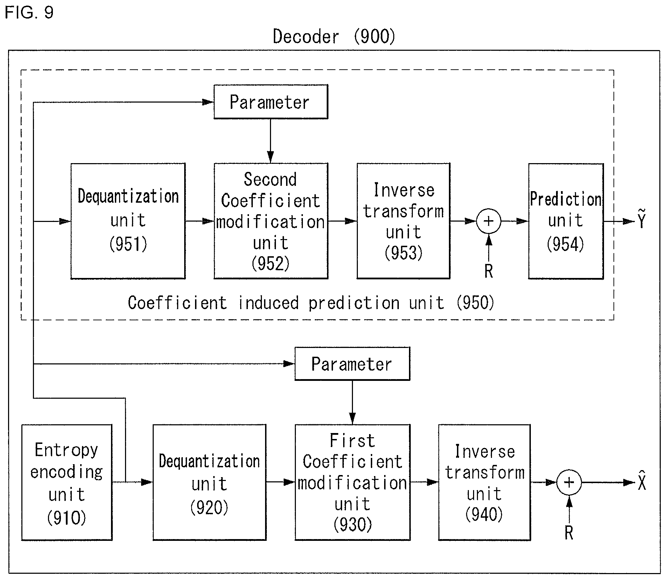

FIG. 9 is an embodiment to which the present invention is applied and shows a schematic block diagram of a decoder performing coefficient induced prediction (CIP) using a reference block.

Referring to FIG. 9, the decoder 900 to which the present invention is applied may include an entropy decoding unit 910, a dequantization unit 920, a first coefficient modification unit 930, an inverse transform unit 940, and a coefficient induced prediction unit 950. Furthermore, the coefficient induced prediction unit 950 may include a dequantization unit 951, a second coefficient modification unit 952, an inverse transform unit 930, and a prediction unit 934. The contents of FIGS. 7 and 8 may be applied to the function units of the decoder. Furthermore, the operations and characteristics of the aforementioned function units may be applied to the function units of the decoder. Hereinafter, a redundant description is omitted, and only a different portion or portions necessary to supplement each embodiment are described.

Referring to FIG. 9, the decoder further includes an addition unit unlike in FIG. 7. It may be seen that the addition unit uses reference data R. In this case, the reference data R may mean an error signal or a correction signal, but the present invention is not limited thereto. The reference data R may mean a prediction signal, and the prediction signal may be obtained by intra prediction or inter prediction.

The decoder 900 may receive an entropy-encoded signal, may perform entropy decoding on the entropy-encoded signal through the entropy decoding unit 910, and may generate the dequantized transform coefficient of a target block by performing dequantization on the entropy-decoded signal through the dequantization unit 920.

The first coefficient modification unit 930 may generate the modified transform coefficient of the target block by applying a first scaling matrix to the dequantized transform coefficient of the target block. In this case, in order to determine the first scaling matrix, at least one parameter may be used. For example, the at least one parameter may include a training set of (X,Y,Ω) triplets.

Furthermore, the modified transform coefficient of the target block may be decoded by performing inverse transform through the inverse transform unit 740. The decoded signal may be added to reference data R to generate a modified decoded signal X. In this case, the reference data R may mean a prediction signal. For example, the prediction signal may be obtained by intra prediction or inter prediction, but the present invention is not limited thereto. The decoded signal may correspond to a residual signal. In this case, the reference data R may mean an error signal or correction signal for the residual signal.

The above process is expressed into Equations 16 and 17 in the form of an equation.

【Equation 16】

$$\hat{C} = dequantize(Q),$$

【Equation 17】

$$\hat{X} = R + T^{-1}S_1(Q, \Omega)\hat{C}$$

Meanwhile, the embodiments described in this specification may be applied to the coefficient induced prediction unit 950. A process of obtaining the scaling matrix through the coefficient induced prediction unit 950 may be expressed into Equation 18.

【Equation 18】

$$\tilde{Y} = simple\_predict(R + T^{-1}S_2(Q, \Omega)\hat{C})$$

In this case, S2 may indicate a second scaling matrix. The second scaling matrix may have a value different from that of the first scaling matrix, but the present invention is not limited thereto. The same matrix may be applied to the two scaling matrices.

The first scaling matrix S1 and the second scaling matrix S2 may be expressed into Equations 19 and 20 in the form of an equation.

【Equation 19】

$$S_1(Q, \Omega)_{i,j} = \begin{cases} f_1(i, Q_i, \Omega), & i = j \\ 0, & otherwise \end{cases}$$

【Equation 20】

$$S_2(Q, \Omega)_{i,j} = \begin{cases} f_2(i, Q_i, \Omega), & i = j \\ 0, & otherwise \end{cases}$$

In this case, f(i,Qi,Ω) indicates the function of indicated parameters, and f may be called a coefficient induced prediction function (CIP function).

In an embodiment of the present invention, the scaling matrices S1 and S2 may be obtained by searching for respective optimal coefficient induced prediction functions (CIP functions). The optimal coefficient induced prediction functions $f_1^*$ and $f_2^*$ may be obtained through Equations 21 and 22. For example, in Equation 21, the first optimal coefficient induced prediction function $f_1^*$ may correspond to a value that minimizes the difference between the target block X and the modified decoded signal $\hat{X}$. In this case, the modified decoded signal $\hat{X}$ is the same as Equation 17.

Furthermore, in Equation 22, the second optimal coefficient induced prediction function $f_2^*$ may correspond to a value that minimizes the difference between a neighboring block Y and the prediction signal $\tilde{Y}$ of the neighboring block. In this case, the prediction signal $\tilde{Y}$ of the neighboring block is the same as Equation 18.

【Equation 21】

$$f_1^* = \text{argmin}_{f_1} \sum_{(X,Y,\Omega) \in \Psi} \left\| X - R - T^{-1} S_1(Q, \Omega) \hat{C} \right\|_2^2$$

【Equation 22】

$$f_2^* = \text{argmin}_{f_2} \sum_{(X,Y,\Omega) \in \Psi} \left\| Y - simple\_predict(R + T^{-1} S_2(Q, \Omega) \hat{C}) \right\|_2^2.$$

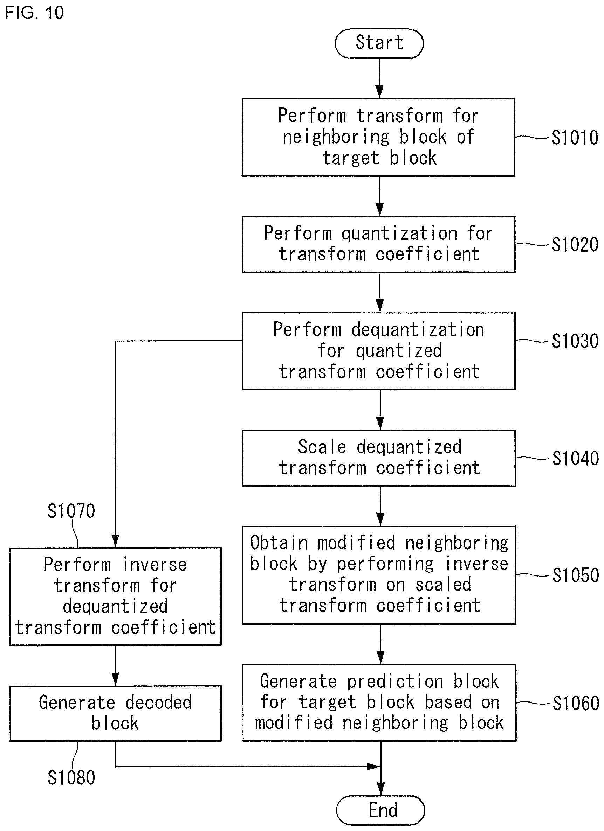

FIG. 10 is an embodiment to which the present invention is applied and shows a flowchart of performing encoding using coefficient induced prediction (CIP).

First, the encoder may perform transform on the neighboring block of a target block (S1010).

The encoder may quantize the transform coefficient of the neighboring block (S1020), and may dequantize the quantized transform coefficient (S1030).

The encoder may perform a scaling on the dequantized transform coefficient of the neighboring block using a scaling matrix (S1040).

In this case, the scaling matrix is derived based on a coding parameter. The coding parameter may include at least one of an intra prediction mode, a quantization parameter, or a block size.

Furthermore, the scaling matrix may be determined based on a quantized transform coefficient vector.

In an embodiment of the present invention, a scaling application flag indicating whether or not to perform a scaling on a dequantized transform coefficient may be defined. The scaling application flag may be defined in various levels (e.g., a sequence, a frame, a slice, a coding unit, a prediction unit, and a transform unit), but the present invention is not limited thereto. The scaling application flag may be used in at least one level.

Furthermore, the scaling application flag may be signaled and transmitted to the decoder, but the present invention is not limited thereto. The scaling application flag may be derived based on coding information. For example, the coding information may include at least one of the coding parameters of a current block or a neighboring block, the scaling application flag of the neighboring block, information common to the encoder/decoder, and information corresponding to $\Omega/Q$.

The present invention may perform the aforementioned embodiments of FIGS. 3 to 9 based on the scaling application flag. For example, the present invention may perform coefficient induced prediction (CIP) on the dequantized transform coefficient of a neighboring block based on the scaling application flag. Furthermore, the present invention may apply a scaling matrix to the dequantized transform coefficient of a target block based on the scaling application flag.

The encoder may obtain a modified neighboring block by performing inverse transform on the scaled transform coefficient (S1050), and may generate a prediction block for the target block based on the modified neighboring block (S1060).

Meanwhile, the encoder may generate a decoded block (S1080) by performing inverse transform on the dequantized transform coefficient of the target block (S1070).

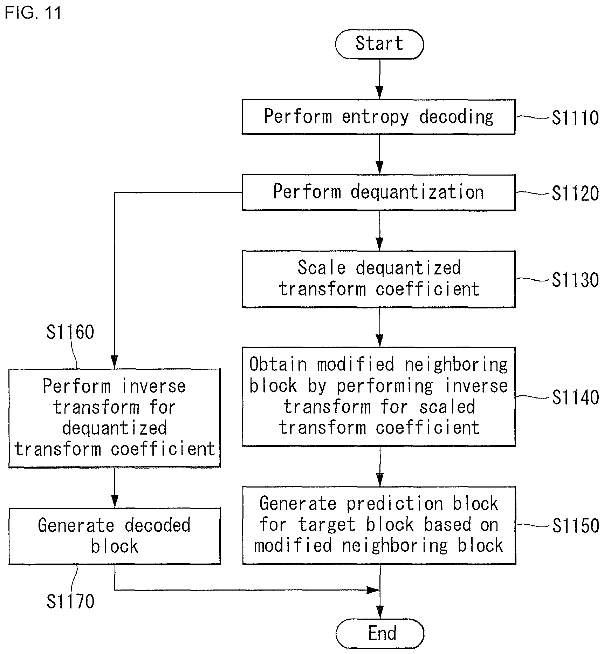

FIG. 11 is an embodiment to which the present invention is applied and shows a flowchart of performing decoding using coefficient induced prediction (CIP).

First, the decoder may perform entropy decoding on the neighboring block of a target block (S1110), and may perform dequantization on the resulting block (S1120).

The decoder may perform a scaling on the dequantized transform coefficient of the neighboring block using a scaling matrix (S1130).

Furthermore, the decoder may obtain a modified neighboring block by performing inverse transform on the scaled transform coefficient (S1140), and may generate a prediction block for the target block based on the modified neighboring block (S1150).

Meanwhile, the decoder may generate a decoded block (S1170) by performing inverse transform on the dequantized transform coefficient of the target block (S1160).

As described above, the embodiments explained in the present invention may be implemented and performed on a processor, a micro-processor, a controller or a chip. For example, functional modules explained in FIGS. 1 to 9 may be implemented and performed on a computer, a processor, a microprocessor, a controller or a chip.

As described above, the decoder and the encoder to which the present invention is applied may be included in a multimedia broadcasting transmission/reception apparatus, a mobile communication terminal, a home cinema video apparatus, a digital cinema video apparatus, a surveillance camera, a video chatting apparatus, a real-time communication apparatus, such as video communication, a mobile streaming apparatus, a storage medium, a camcorder, a VoD service providing apparatus, an Internet streaming service providing apparatus, a three-dimensional 3D video apparatus, a teleconference video apparatus, and a medical video apparatus and may be used to code video signals and data signals.

Furthermore, the decoding/encoding method to which the present invention is applied may be produced in the form of a program to be executed by a computer and may be stored in a computer-readable recording medium. Multimedia data having a data structure according to the present invention may also be stored in computer-readable recording media. The computer-readable recording media include all types of storage devices in which data readable by a computer system is stored. The computer-readable recording media may include a BD, a USB, ROM, RAM, CD-ROM, a magnetic tape, a floppy disk, and an optical data storage device, for example. Furthermore, the computer-readable recording media includes media implemented in the form of carrier waves, e.g., transmission through the Internet. Furthermore, a bit stream generated by the encoding method may be stored in a computer-readable recording medium or may be transmitted over wired/wireless communication networks.

[Industrial Applicability]

The exemplary embodiments of the present invention have been disclosed for illustrative purposes, and those skilled in the art may improve, change, replace, or add various other embodiments within the technical spirit and scope of the present invention disclosed in the attached claims.

**Claims**

1. A method of performing an enhanced prediction on a video signal, comprising:

   performing an entropy decoding and a dequantization for a neighboring block of a target block;
   performing a scaling on a dequantized transform coefficient of the neighboring block using a scaling matrix;
   performing an inverse transform for the scaled transform coefficient to obtain a modified neighboring block; and
   generating a prediction block for the target block based on the modified neighboring block.

2. The method of claim 1, wherein:

   the scaling matrix is derived based on a coding parameter, and
   the coding parameter comprises at least one of an intra prediction mode, a quantization parameter, or a block size.

3. The method of claim 1, wherein the scaling matrix is determined based on a quantized transform coefficient vector.

4. The method of claim 1, further comprising extracting a scaling application flag from the video signal,
   wherein the scaling application flag indicates whether or not to perform the scaling on the dequantized transform coefficient.

5. The method of claim 1, further comprising deriving a scaling application flag from the video signal,
   wherein the scaling application flag is derived based on at least one of coding information of the neighboring block and a scaling application flag of the neighboring blocks.

6. A method of performing an enhanced prediction on a video signal, comprising:

   performing a transform for a neighboring block of a target block;
   quantizing a transform coefficient of the neighboring block;
   dequantizing the quantized transform coefficient;
   performing a scaling on the dequantized transform coefficient using a scaling matrix;
   obtaining a modified neighboring block by performing inverse transform on the scaled transform coefficient; and
   generating a prediction block for the target block based on the modified neighboring block.

7. The method of claim 6, wherein:

   the scaling matrix is derived based on a coding parameter, and
   the coding parameter comprises at least one of an intra prediction mode, a quantization parameter, or a block size.

8. The method of claim 6, wherein the scaling matrix is determined based on a quantized transform coefficient vector.

9. The method of claim 6, further comprising encoding a scaling application flag value indicating that the scaling has been performed on the dequantized transform coefficient.

10. An apparatus performing an enhanced prediction on a video signal, comprising:

an entropy decoding unit configured to perform an entropy decoding for a neighboring block of a target block;
a dequantization unit configured to perform a dequantization for the entropy-decoded neighboring block;
a scaling unit configured to perform a scaling on a dequantized transform coefficient using a scaling matrix;
an inverse transform unit configured to obtain a modified neighboring block by performing inverse transform on the scaled transform coefficient; and
a prediction unit configured to generate a prediction block for the target block based on the modified neighboring block.

11. The apparatus of claim 10, wherein:

the scaling matrix is derived based on a coding parameter, and
the coding parameter comprises at least one of an intra prediction mode, a quantization parameter, or a block size.

12. The apparatus of claim 10, wherein the scaling matrix is determined based on a quantized transform coefficient vector.

13. The apparatus of claim 10, further comprising a parsing unit configured to extract a scaling application flag from the video signal,
wherein the scaling application flag indicates whether or not to perform the scaling on the dequantized transform coefficient.

14. An apparatus performing an enhanced prediction on a video signal, comprising:

a transform unit configured to perform a transform for a neighboring block of a target block;
a quantization unit configured to perform a quantization for a transform coefficient;
an inverse transform unit configured to perform a dequantization for the quantized transform coefficient;
a scaling unit configured to perform a scaling on the dequantized transform coefficient using a scaling matrix;
an inverse transform unit configured to obtain a modified neighboring block by performing an inverse transform for the scaled transform coefficient; and
a prediction unit configured to generate a prediction block for the target block based on the modified neighboring block.

15. The apparatus of claim 14, wherein:

the scaling matrix is derived based on a coding parameter, and
the coding parameter comprises at least one of an intra prediction mode, a quantization parameter, or a block size.

FIG. 1

ENCODER (100)

INPUT VIDEO → IMAGE SPLITTING UNIT(110)

TRANSFORM UNIT (120)

QUANTIZATION UNIT (130)

ENTROPY-ENCODING UNIT (190) → BIT STREAM

DECODED PICTURE BUFFER (170)

INTER-PREDICTION UNIT(180)

INTRA-PREDICTION UNIT(185)

FILTERING UNIT(160)

INVERSE-TRANSFORM UNIT(150)

DEQUANTIZATION UNIT(140)

DECODER (200)

FIG. 2

BIT STREAM → ENTROPY-DECODING UNIT (210) → DEQUANTIZATION UNIT (220) → INVERSE TRANSFORM UNIT (230) → (+) → FILTERING UNIT (240) → RECONSTRUCTED VIDEO

INTRA-PREDICTION (265)

INTER-PREDICTION UNIT (260)

DECODED PICTURE BUFFER (250)

EP 3 355 580 A1

FIG. 3

Encoder (310)

```
X ──▶ │Transform│ ──▶ │Quantization│ ──▶ │ Entropy  │ ──▶ ┄┄┄┄┐
       │  unit   │     │    unit    │     │ encoding │
       │  (311)  │     │   (312)    │     │   unit   │
                                          │   (313)  │

                                          │Prediction│ ──▶ Ỹ
                                          │   unit   │
                                          │  (316)   │
       │Dequantization│ ──▶ │ Inverse  │
       │     unit     │     │transform │ ──────────────▶ X̂
       │    (314)     │     │   unit   │
                            │  (315)   │
```

Decoder (320)

```
┄┄┄▶ │ Entropy  │ ──▶ │Dequantization│ ──▶ │ Inverse  │
      │ encoding │     │     unit     │     │transform │
      │   unit   │     │    (322)     │     │   unit   │
      │  (321)   │                          │  (323)   │

                                            │Prediction│ ──▶ Ỹ
                                            │   unit   │
                                            │  (324)   │

                                                       ──▶ X̂
```

FIG. 4

Encoder (400)

FIG. 5

Decoder (500)

FIG. 6

Decoder (600)

```
                    ┌─────────────┐
           ┌───────▶│  Parameter  │
           │        └──────┬──────┘
           │               │
           │               ▼
  ┌──────────────┐ ┌──────────────┐ ┌──────────────┐ ┌──────────────┐
  │Dequantization│ │  Coefficient │ │    Inverse   │ │  Prediction  │
  │     unit     │▶│ modification │▶│  transform   │▶│     unit     │──▶ Ỹ
  │    (641)     │ │     unit     │ │     unit     │ │    (644)     │
  │              │ │    (642)     │ │    (643)     │ │              │
  └──────────────┘ └──────────────┘ └──────────────┘ └──────────────┘
        Coefficient induced prediction unit (640)


  ┌──────────────┐ ┌──────────────┐        ┌──────────────┐
  │   Entropy    │ │Dequantization│        │   Inverse    │
  │   encoding   │▶│     unit     │───────▶│  transform   │──▶ X̂
  │     unit     │ │    (620)     │        │     unit     │
  │    (610)     │ │              │        │    (530)     │
  └──────────────┘ └──────────────┘        └──────────────┘
```

21

FIG. 7

Decoder (700)

FIG. 8

Decoder (800)

Q, flag2 → Parameter

Q → Dequantization unit (851) → Second Coefficient modification unit (852) → Inverse transform unit (853) → Prediction unit (854) → $\tilde{Y}$

Coefficient induced prediction unit (850)

Q, flag1 → Parameter

Entropy encoding unit (810) → Q → Dequantization unit (820) → First Coefficient modification unit (830) → Inverse transform unit (840) → $\hat{X}$

FIG. 9

Decoder (900)

Coefficient induced prediction unit (950)

FIG. 10

```
                        ┌──────────┐
                        │   Start  │
                        └──────────┘
                             │
                             ▼
              ┌─────────────────────────────┐
              │    Perform transform for    │
              │    neighboring block of     │────S1010
              │        target block         │
              └─────────────────────────────┘
                             │
                             ▼
              ┌─────────────────────────────┐
              │   Perform quantization for  │────S1020
              │     transform coefficient   │
              └─────────────────────────────┘
                             │
                             ▼
              ┌─────────────────────────────┐
         ┌────│    Perform dequantization   │
         │    │       for quantized         │────S1030
         │    │     transform coefficient   │
         │    └─────────────────────────────┘
         │                   │
         │                   ▼
         │    ┌─────────────────────────────┐
         │    │      Scale dequantized      │────S1040
         │    │     transform coefficient   │
         │    └─────────────────────────────┘
         │                   │
 S1070   │                   ▼
         │    ┌─────────────────────────────┐
  ┌──────▼──────┐ │ Obtain modified neighboring │
  │   Perform   │ │ block by performing inverse │
  │   inverse   │ │   transform on scaled       │────S1050
  │ transform for│ │   transform coefficient     │
  │  dequantized │ └─────────────────────────────┘
  │   transform  │              │
  │  coefficient │              ▼
  └──────────────┘ ┌─────────────────────────────┐
         │         │   Generate prediction block │
         ▼         │    for target block based on│────S1060
  ┌──────────────┐ │   modified neighboring block│
  │   Generate   │ └─────────────────────────────┘
  │   decoded    │              │
  │    block     │              │
  └──────────────┘              │
         │                      ▼
 S1080                   ┌──────────┐
                         │    End   │
                         └──────────┘
```

FIG. 11

```
                              ┌─────────┐
                              │  Start  │
                              └────┬────┘
                                   │
                                   ▼
                    ┌───────────────────────────┐
                    │ Perform entropy decoding   │───S1110
                    └─────────────┬─────────────┘
                                  │
                                  ▼
                    ┌───────────────────────────┐
         ┌──────────│  Perform dequantization    │───S1120
         │          └─────────────┬─────────────┘
         │                        │
         │                        ▼
         │          ┌───────────────────────────┐
         │          │    Scale dequantized       │───S1130
         │          │  transform coefficient     │
         │          └─────────────┬─────────────┘
         │                        │
  S1160  │                        ▼
    │    │          ┌───────────────────────────┐
    ▼    ▼          │ Obtain modified neighboring│
┌─────────────┐     │ block by performing inverse│───S1140
│   Perform   │     │  transform for scaled      │
│ inverse     │     │  transform coefficient     │
│ transform   │     └─────────────┬─────────────┘
│ for         │                   │
│ dequantized │                   ▼
│ transform   │     ┌───────────────────────────┐
│ coefficient │     │ Generate prediction block  │
└──────┬──────┘     │  for target block based on │───S1150
       │            │ modified neighboring block │
       ▼            └─────────────┬─────────────┘
┌─────────────┐                   │
│  Generate   │                   │
│  decoded    │                   │
│  block      │───────────┐       │
└──────┬──────┘           │       │
       │                  ▼       ▼
    S1170              ┌─────────┐
                       │   End   │
                       └─────────┘
```

| INTERNATIONAL SEARCH REPORT | International application No. |
|---|---|
| | **PCT/KR2016/010504** |

**A.  CLASSIFICATION OF SUBJECT MATTER**

*H04N 19/132(2014.01)i, H04N 19/134(2014.01)i, H04N 19/105(2014.01)i, H04N 19/11(2014.01)i, H04N 19/119(2014.01)i, H04N 19/124(2014.01)i, H04N 19/91(2014.01)i, H04N 19/13(2014.01)i*

According to International Patent Classification (IPC) or to both national classification and IPC

**B.  FIELDS SEARCHED**

Minimum documentation searched (classification system followed by classification symbols)

H04N 19/132; H04N 19/80; H04N 7/30; H04N 19/59; H04N 19/60; H04N 19/117; H04N 19/124; H04N 19/134; H04N 19/105; H04N 19/119; H04N 19/91

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: transform coefficient, scaling, quantum, intra, reference

**C.  DOCUMENTS CONSIDERED TO BE RELEVANT**

| Category* | Citation of document, with indication, where appropriate, of the relevant passages | Relevant to claim No. |
|---|---|---|
| Y | KR 10-2015-0024440 A (SONY CORP.) 06 March 2015<br>See paragraphs [0059]-[0077], [0431]-[0440]; and figures 1, 22. | 1-15 |
| Y | KR 10-2013-0056190 A (RESEARCH IN MOTION LIMITED) 29 May 2013<br>See paragraphs [0153]-[0159]; claims 1-4; and figure 8. | 1-15 |
| A | KR 10-2013-0050896 A (SAMSUNG ELECTRONICS CO., LTD.) 16 May 2013<br>See paragraphs [0022]-[0052]; and figure 1. | 1-15 |
| A | KR 10-2014-0024958 A (QUALCOMM INCORPORATED) 03 March 2014<br>See paragraphs [0187]-[0192]; and figure 8. | 1-15 |
| A | US 2013-0170555 A1 (ZHANG, Lei) 04 July 2013<br>See paragraphs [0031]-[0038]; and figure 2. | 1-15 |

☐ Further documents are listed in the continuation of Box C.   ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 09 JANUARY 2017 (09.01.2017) | **10 JANUARY 2017 (10.01.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No.  82-42-472-7140 | Telephone No. |

Form PCT/ISA/210 (second sheet) (January 2015)

INTERNATIONAL SEARCH REPORT
Information on patent family members

International application No.

**PCT/KR2016/010504**

| Patent document cited in search report | Publication date | Patent family member | Publication date |
|---|---|---|---|
| KR 10-2015-0024440 A | 06/03/2015 | CA 2763887 A1 | 06/01/2011 |
| | | CN 102474617 A | 23/05/2012 |
| | | CN 102474617 B | 16/11/2016 |
| | | CN 104125468 A | 29/10/2014 |
| | | EP 2451162 A1 | 09/05/2012 |
| | | JP 2011-030175 A | 10/02/2011 |
| | | JP 2013-009418 A | 10/01/2013 |
| | | JP 2014-103686 A | 05/06/2014 |
| | | JP 2014-103687 A | 05/06/2014 |
| | | JP 2014-225910 A | 04/12/2014 |
| | | JP 5429582 B2 | 26/02/2014 |
| | | JP 5597968 B2 | 01/10/2014 |
| | | JP 5733587 B2 | 10/06/2015 |
| | | JP 5854296 B2 | 09/02/2016 |
| | | KR 10-2012-0036847 A | 18/04/2012 |
| | | KR 10-2016-0142409 A | 12/12/2016 |
| | | KR 10-2016-0143871 A | 14/12/2016 |
| | | US 2012-0093426 A1 | 19/04/2012 |
| | | US 2013-0330014 A1 | 12/12/2013 |
| | | US 2014-0376630 A1 | 25/12/2014 |
| | | US 2014-0376631 A1 | 25/12/2014 |
| | | US 8675978 B2 | 18/03/2014 |
| | | US 8885956 B2 | 11/11/2014 |
| | | WO 2011-001865 A1 | 06/01/2011 |
| KR 10-2013-0056190 A | 29/05/2013 | CA 2796778 A1 | 21/05/2013 |
| | | EP 2595382 A2 | 22/05/2013 |
| | | EP 2595382 A3 | 20/08/2014 |
| | | KR 10-1506372 B1 | 26/03/2015 |
| | | US 2013-0129241 A1 | 23/05/2013 |
| | | US 2015-0110408 A1 | 23/04/2015 |
| | | US 8942495 B2 | 27/01/2015 |
| | | US 9264722 B2 | 16/02/2016 |
| KR 10-2013-0050896 A | 16/05/2013 | EP 2779646 A1 | 17/09/2014 |
| | | TW 201325247 A | 16/06/2013 |
| | | US 2014-0301450 A1 | 09/10/2014 |
| | | WO 2013-069958 A1 | 16/05/2013 |
| KR 10-2014-0024958 A | 03/03/2014 | CN 103636202 A | 12/03/2014 |
| | | EP 2724535 A1 | 30/04/2014 |
| | | EP 3035684 A1 | 22/06/2016 |
| | | JP 2014-520490 A | 21/08/2014 |
| | | JP 5844460 B2 | 20/01/2016 |
| | | KR 10-1642615 B1 | 25/07/2016 |
| | | US 2012-0328004 A1 | 27/12/2012 |
| | | WO 2012-178053 A1 | 27/12/2012 |
| US 2013-0170555 A1 | 04/07/2013 | CN 103188491 A | 03/07/2013 |

Form PCT/ISA/210 (patent family annex) (January 2015)

INTERNATIONAL SEARCH REPORT
Information on patent family members

International application No.

**PCT/KR2016/010504**

| Patent document cited in search report | Publication date | Patent family member | Publication date |
|---|---|---|---|
| | | EP 2611155 A1 | 03/07/2013 |
| | | KR 10-1365101 B1 | 20/02/2014 |
| | | KR 10-2013-0076690 A | 08/07/2013 |
| | | TW 201328361 A | 01/07/2013 |

Form PCT/ISA/210 (patent family annex) (January 2015)